(19) Europäisches Patentamt
European Patent Office
Office européen des brevets

(11) EP 3 263 209 A1

(12) **EUROPEAN PATENT APPLICATION**

(43) Date of publication:
**03.01.2018 Bulletin 2018/01**

(21) Application number: **17177592.7**

(22) Date of filing: **23.06.2017**

(51) Int Cl.:
***B01D 67/00*** (2006.01) ***B01D 69/02*** (2006.01)
***B01D 71/28*** (2006.01) ***B01D 71/40*** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **30.06.2016 EP 16177267**

(71) Applicant: **BASF SE**
**67056 Ludwigshafen am Rhein (DE)**

(72) Inventors:
- **Gerst, Matthias**
  **67487 Maikammer (DE)**
- **Moebius, Stephan**
  **67061 Ludwigshafen (DE)**
- **Marczewski, Dawid**
  **67117 Limburgerhof (DE)**
- **Piradashvili, Keti**
  **55122 Mainz (DE)**
- **Staudt, Claudia**
  **Shanghai, 200137 (CN)**
- **Fu, Xiao**
  **791408 Singapore (SG)**
- **Widjojo, Natalia**
  **650171 Singapore (SG)**
- **Jung, Marc Rudolf**
  **098652 Singapore (SG)**
- **Yeo, Chun Hui**
  **680217 Singapore (SG)**

(74) Representative: **BASF IP Association**
**BASF SE**
**G-FLP-C006**
**67056 Ludwigshafen (DE)**

# (54) MEMBRANES COMPRISING POLYMERIC PARTICLE LAYERS

(57) The present invention relates to a process for the preparation of porous membranes, which process comprises the steps of a) dispersing latex particles in at least one water-soluble polymeric pore forming-agent to obtain a latex particle dispersion, b) forming a layer from said dispersion, c) stabilizing said layer to obtain a polymer film, and d) treating the polymer film of step c) with a polar solvent, to remove the water-soluble polymeric pore forming-agent. The present invention further relates to membranes which are obtained according to said process and are useful for ultrafiltration, nanofiltration, reverse osmosis, battery separators or selective extraction film gas separation.

EP 3 263 209 A1

## Description

The present invention relates to a process for the preparation of porous membranes, membranes obtainable by such a process and the use of said membranes in separation processes, like pressure-driven separation processes.

## Background of the invention

The use of membranes in separation processes is rapidly growing in the chemical, food, beverage, electronic, and pharmaceutical industries. The membranes are becoming increasingly important in environmental technology such as the recycling of waste waters in laundry systems.

FR 2099183 A describes ultrafiltration membranes formed by filtering an emulsion of generally spherical submicron polymer particles formed by emulsion polymerization through a permeable substrate on which the particles are deposited on one side. EP 0711199 B1 describes the preparation of porous composite membranes for use in ultrafiltration and microfiltration by applying polymer particles on a porous support. US 6,750,050 B2 describes porous films including a blend of a film forming polymer and a non-film forming material, the film having a network of pores or channels throughout the film.

State of the art processes for the preparation of separation membranes, in particular on the basis of aqueous latex particle dispersions, comprise the steps of forming a layer from the dispersions, evaporating water from the layer to get the particles in close contact, deformation of the particles and optionally annealing at elevated temperatures, in order to obtain a mechanically stable film. Membranes that are obtained according to said processes, however, suffer from pore sizes that become too small during the stabilization steps and result in a large pore size distribution, which would diminish selectivity of such membranes.

It is therefore an object of the invention to provide a process for the preparation of porous membranes, wherein it is possible to adjust the pore sizes of the membranes in a desired range and to prevent a downsizing of the pores during the stabilization of the membrane structure. It is a further object of the invention to obtain membranes according to said process, which can be used for separation processes, in particular pressure-driven processes, such as ultrafiltration, nanofiltration, reverse osmosis, forward osmosis, battery separators or selective extraction film gas separation.

## Summary of the invention

It has been found that said objects have been achieved by a preparation process comprising the steps of a) dispersing latex particles in at least one water-soluble polymeric pore forming-agent to obtain a latex particle dispersion, b) forming a layer from said dispersion, c) stabilizing said layer to obtain a polymer film, and d) treating the polymer film of step c) with a polar solvent, to remove the water-soluble polymeric pore forming-agent.

## Brief description of the Drawings

Figure 1 schematically illustrates a membrane of the invention comprising two polymer films placed on top of a planar support. The bottom layer film, which is directly in contact with the support, comprises particles with a mean particle diameter greater than that of the particles of the upper polymer film.

## Detailed description of the invention

### I. General Definitions

In the context of the present invention a "membrane" generally shall be understood to be a thin, semipermeable porous structure capable of separating two fluids or in particular, separating uncharged molecules and/or ionic components or small particles from a liquid. The membrane acts as a size selective barrier, allowing certain particles, substances or chemicals to pass through while retaining others. If not otherwise stated, a membrane comprises organic polymers as the main components. Such polymer shall be considered the main component of a membrane if it is comprised in an amount of at least 50 %by weight, preferably at least 60%, more preferably at least 70%, even more preferably at least 80% and particularly preferably at least 90% by weight of the final membrane.

"Membranes for water treatment" are generally semi-permeable membranes which allow for separation of dissolved and suspended particles of water, wherein the separation process itself can be either pressure-driven or electrically driven.

"Pressure-driven" membrane technologies comprise microfiltration (MF; typical pore size about 0.08 to 2 μm, for separation of very small, suspended particles, colloids, bacteria), ultrafiltration (UF; typical pore size about 0.005 to 0.2 μm; for separation of organic particles > 1000 MW, viruses, bacteria, colloids), nanofiltration (NF, typical pore size

0.001 to 0.01 μm, for separation of organic particles > 300 MW Trihalomethan (THM) precursors, viruses, bacteria, colloids, dissolved solids) or reverse osmosis (RO, typical pore size 0.0001 to 0.001 μm, for separation of ions, organic substances > 100 MW) or forward osmosis (FO).

"Molecular weights" of polymers are, unless otherwise stated as Mw values, in particular determined via GPC in DMAc. In particular, the GPC measurements were performed with dimethylacetamide (DMAc) containing 0.5 wt -% lithium bromide. Polyester copolymers were used as column material. The calibration of the columns was performed with narrowly distributed PMMA standards. As flow rate 1 ml / min was selected, the concentration of the injected polymer solution was 4 mg / ml.

A "support" or "support layer" of the present invention also shows a porous structure, is permeable for those constituents that also pass through the "separation layer" and may also be designated as "membrane". It may also be designated as "carrier" or "carrier membrane" or as a "substrate layer", "support", "support layer", "support membrane", or "scaffold layer". If not otherwise stated such carriers normally have an average pore diameter of 0.5 nm to 1000 nm.

A "separation layer" also designated as "rejection layer", is attached to and formed on (the outer surface of) the carrier or substrate layer. The separation layer normally is in direct contact with the liquid medium.

A "composite membrane" comprises at least one separation layer as defined above and optionally at least one substrate layer as defined above associated with the at least one separation layer. "Associated with" encompasses any type of interaction between substrate and separation layer, which allows a reversible (in particular by ionic or hydrophobic interactions) or irreversible (in particular by forming covalent chemical bonds) ligation of said two layers. Preferred in the context of the present invention are reversible, non-covalent interactions between substrate and separation layers.

"Flat sheet membranes" show a planar structure und comprise at least one substrate layer and at least one separation layer as defined above.

The prefix "(meth)" as used herein in chemical names such as "(meth)acrylate", "(meth)acrylic acid" or "(meth)acrylic amide" means that said chemical names designate both, the acrylic and methacrylic compounds.

"Alkyl" comprises straight-chain and branched short or long chain alkyl groups, especially having 1 to 30 carbon atoms, i.e., "$C_1$-$C_{30}$ alkyl", or having 1 to 10 carbon atoms, i.e., "$C_1$-$C_{10}$ alkyl".

Suitable "short-chain" alkyl groups are, for example, straight-chain or branched $C_1$-$C_7$ alkyl, preferably $C_1$-$C_6$ alkyl, and more preferably $C_1$-$C_4$ alkyl groups. These include, in particular, methyl, ethyl, propyl, isopropyl, n-butyl, 2-butyl, sec-butyl, tert-butyl, n-pentyl, 2-pentyl, 2-methylbutyl, 3-methylbutyl, 1,2-dimethylpropyl, 1,1-dimethylpropyl, 2,2-dimethylpropyl, 1-ethylpropyl, n-hexyl, 2-hexyl, 2-methylpentyl, 3-methylpentyl, 4-methylpentyl, 1,2-dimethylbutyl, 1,3-dimethylbutyl, 2,3-dimethylbutyl, 1,1-dimethylbutyl, 2,2-dimethylbutyl, 3,3-dimethylbutyl, 1,1,2-trimethylpropyl, 1,2,2-trimethylpropyl, 1-ethylbutyl, 2-ethylbutyl, 1-ethyl-2-methylpropyl, n-heptyl, 2-heptyl, 3-heptyl, 2-ethylpentyl, 1-propylbutyl, etc.

Suitable "long chain" alkyl groups are, for example, straight-chain and branched $C_8$-$C_{30}$ alkyl groups, preferably $C_8$-$C_{20}$ alkyl groups, more preferably $C_8$-$C_{12}$ alkyl groups. Preferably these are linear alkyl radicals, such as also occur in natural or synthetic fatty acids and fatty alcohols and also in oxo-process alcohols. They include, for example, n-octyl, n-nonyl, n-decyl, n-undecyl, n-dodecyl, n-tridecyl, n-tetradecyl, n-pentadecyl, n-hexadecyl, n-heptadecyl, n-octadecyl, and n-nonadecyl. The expression "alkyl" comprises unsubstituted and substituted alkyl radicals.

The above definitions provided for "alkyl" also apply analogously to the alkyl groups in alkanol, alkylamine, alkylketone, and alkanecarboxylic acids.

"Alkylene" comprises straight-chain or branched alkanediyl groups having 1 to 7 carbon atoms, such as, for example, methylene, 1,2-ethylene, 1,2-propylene, 1,3-propylene, 1,2-butylene, 1,3-butylene, 1,4-butylene, 2-methyl-1,2-propylene, etc.

The glass transition temperature "$T_g$" refers to the midpoint temperature according to ASTM 3418/82, and may be determined by means of dynamic-mechanical thermal analysis (DMTA). The glass transition temperature of a polymer can also be determined by differential scanning calorimetry (DSC).

The mean particle diameter of latex particles is determined by dynamic light scattering (DLS) for mono-modal distributions and by Disc Centrifuge Particle Size Analysis (DCP) for multi-modal distributions.

Alternatively, hydrodynamic fractionation using a PSDA (Particle Size Distribution Analyzer) from Polymer Labs may be used for the determination of mean particle diameters. The Cartridge PL0850-1020 column type used is operated with a flow rate of 2 ml/min. The samples are diluted to an absorption of 0.03 AU/μl with the eluent solution. The sample is eluted, through the size exclusion principle, in dependence on the hydrodynamic diameter 10. The eluent contains 0.2% by weight of dodecyl poly(ethylene glycol ether)23, 0.05% by weight of sodium dodecyl sulfate, 0.02% by weight of sodium dihydrogenphosphate, and 0.02% by weight of sodium azide in deionized water. The pH is 5.8. The elution time is calibrated using polystyrene latices. Measurement takes place in the 20 nm to 1200 nm range. Detection is carried out using a UV detector at a wavelength of 254 nm.

Based on the 90% MWCO (molecular weight cut-off), the mean pore size of the membranes was determined using the following Einstein-Stokes equations which describe the radii (r) of PEG (polyethylene glycol) and PEO (polyethylene oxide) as a function of their molecular weights (*M*):

For PEG,

$$r = 16.73 \times 10^{-12} \times M^{0.557} \quad (1)$$

For PEO,

$$r = 10.44 \times 10^{-12} \times M^{0.587} \quad (2)$$

**II. Preferred Embodiments**

The present invention relates to the following embodiments:

1. A process for the preparation of porous membranes, preferably comprising at least one separation layer, which process comprises the steps of

   a) dispersing latex particles in at least one water-soluble polymeric pore forming-agent to obtain a latex particle dispersion,

   b) forming a layer from said dispersion,

   c) stabilizing said layer to obtain a polymer film, and

   d) treating the polymer film of step c) with a polar solvent, to remove the water-soluble polymeric pore forming-agent, so that a separation layer is formed.

2. The process according to embodiment 1, wherein the sequence of steps a) to c) is repeated at least once, as for example 1 to 10, preferably 1 to 5, most preferable 1, 2 or 3 times, before step d) or after step d) followed by a final washing step d), to obtain a porous membrane having a first and at least one further polymer film, wherein the latex particle dispersion for preparing said further polymer film may or may not contain, preferably contains, at least one water-soluble polymeric pore forming-agent.

3. The process according to embodiment 1, wherein the sequence of steps a) to d) is repeated at least once, as for example 1 to 10, preferably 1 to 5, most preferable 1, 2 or 3 times, after step d), to obtain a porous composite membrane having a first and at least one further polymer film, wherein the latex particle dispersion for preparing said further polymer film may or may not contain, preferably contains, at least one water-soluble polymeric pore forming-agent.

4. The process according to any of the embodiments 2 or 3, wherein the porous membrane is a composite membrane and comprises two or three super-imposed polymer films.

5. The process according to any of the embodiments 2 to 4, wherein the latex particle dispersion for preparing each further polymer film contains at least one water-soluble polymeric pore forming-agent.

6. The process according to any of the embodiments 2 to 4, wherein the latex particle dispersion contains said pore forming agent in an amount of 2-15 wt.-% to 10 to 25 wt.-%, preferably 5 to 10 wt.-% to 12 to 20 wt.-%, based on the total weight of the dispersion.

7. The process according to any of the embodiments 2 to 4, wherein the latex particle dispersion contains said latex particles in an amount of 35-75 wt.-%, preferably 40 to 70 wt.-%, more preferably 40 to 55 wt.-%, based on the total weight of the dispersion.

8. The process according to any of the preceding embodiments, wherein in step c) the layer is stabilized by heating the layer to a temperature above the glass transition temperature of the latex particles.

9. The process according to embodiment 8, wherein the layer is heated to a temperature in a range of from -40 to

200 °C, preferably 20 to 160 °C.

10. The process according to any of embodiments 1 to 9, wherein in step c) the layer is stabilized by non-covalent hydrophilic interactions between the latex particles, e.g. van der Waals interactions.

11. The process according to embodiment 10, wherein the latex particles are core-shell particles or stage polymerized particles carrying hydrophilic groups at least on their surface.

12. The process according to any of embodiments 1 to 9, wherein in step c) the layer is stabilized by crosslinking of latex particles carrying crosslinkable functional groups at least on their surface.

13. The process according to embodiment 12, wherein for crosslinking the layer is heated to a temperature in a range of 20 to 150 °C, preferably 40 to 130 °C.

14. The process according to embodiment 12 or 13, wherein in step c) (i) crosslinking is performed by (i) reacting the crosslinkable groups contained in the layer and/or by (ii) bringing at least one crosslinking agent in contact with the layer.

15. The process according to embodiment 14, wherein the crosslinking agent is selected from melamine-formaldehyde derivatives; urea formaldehyde; benzoguanamine; glycouril; ammonium metal carbonates, wherein the metal is selected from zinc, zirconium, calcium or aluminum; polyfunctional aziridines, such as pentaerythritol tris(3-(1-aziridinyl) propionate; polycarbodiimides; hydrazine-based agents, such as reaction products of hydrazine and $C_2$-$C_6$ dicarboxylic acids, e.g. oxalic acid, malonic acid, succinic acid, glutaric acid or adipic acid; or a mixture thereof.

16. The process according to embodiment 14, wherein the crosslinkable groups are selected from $C_1$-$C_4$ alkylol groups, $C_1$-$C_4$ alkyloxy-$C_1$-$C_4$-alkyl groups, epoxy groups, oxazoline groups, amine groups, carboxy groups, carboxylate groups, hydroxy groups and/or keto groups.

17. The process according to any of the preceding embodiments, wherein in step b) the layer is formed on a planar support.

18. The process according to embodiment 17, wherein said support is made of non-woven materials, polyethylene terephthalate films, polyethylene films, polypropylene films, polyester films or glass sheets.

19. The process according to any of preceding embodiments, wherein the latex particles have a mean particle diameter, determined by dynamic light scattering (DLS) or disc centrifuge particle size analysis (DCP), of 30 to 800 nm, preferably 50 to 550 nm.

20. The process according to any of the preceding embodiments, wherein each polymer film has a thickness of 30 to 500 $\mu$m, preferably 30 to 200 $\mu$m.

21. The process according to any of the preceding embodiments, wherein the latex particle dispersion additionally comprises at least one emulsifier, preferably selected from the group consisting of anionic, cationic or nonionic emulsifiers, preferably anionic and nonionic emulsifiers, or mixtures thereof.

22. The process according to any of the preceding embodiments, wherein the latex particle dispersion additionally comprises at least one defoamer, preferably selected from the group consisting of polysiloxanes, such as poly$C_1$-$C_6$alkyl siloxanes, poly$C_1$-$C_6$alkylaryl siloxanes, polyether siloxane co-polymers, $C_1$-$C_4$-alkoxylated $C_1$-$C_6$alcohols, triisobutyl phosphate, fumed silica and mixtures thereof.

23. The process according to any of the preceding embodiments, wherein the latex particles are prepared by means of emulsion polymerization.

24. The process according to any of the preceding embodiments, wherein the latex particles are homo- and/or copolymers of ethylenically unsaturated monomers.

25. The process according to embodiment 24, wherein the ethylenically unsaturated monomers are selected from

a) monomers M1 selected from the group consisting of esters of monoethylenically unsaturated $C_3$-$C_8$ monocarboxylic acids with $C_1$-$C_{10}$ alkanols; and vinylaromatic hydrocarbons;

b) polar monomers M2 selected from the group consisting of hydroxy-$C_2$-$C_4$ alkyl esters of monoethylenically unsaturated $C_3$-$C_8$ monocarboxylic acids, primary amides of monoethylenically unsaturated $C_3$-$C_8$ monocarboxylic acids, esters of hydroxy-$C_3$-$C_{10}$-alkylketones with monoethylenically unsaturated $C_3$-$C_8$ monocarboxylic acids, amides of amino-$C_3$-$C_{10}$-alkylketones with monoethylenically unsaturated $C_3$-$C_8$ monocarboxylic acids, monoesters of monoethylenically unsaturated $C_3$-$C_8$ carboxylic acids with poly-oxy-$C_2$-$C_4$ alkylene ethers, and monoethylenically unsaturated monomers having at least one urea group;

c) monomers M3 having an acidic group selected from the group consisting of monoethylenically unsaturated $C_3$-$C_8$ monocarboxylic acids and monoethylenically unsaturated $C_4$-$C_8$ dicarboxylic acids, 2-(meth)acrylamide-$C_2$-$C_6$-alkyl sulfonic acid;

d) crosslinking monomers M4 having at least two non-conjugated ethylenically unsaturated double bonds selected from the group consisting of diesters of monoethylenically unsaturated $C_3$-$C_8$ monocarboxylic acids with saturated aliphatic or cycloaliphatic diols, monoesters of monoethylenically unsaturated $C_3$-$C_8$ monocarboxylic acids with monoethylenically unsaturated aliphatic or cycloaliphatic monohydroxy compounds and divinyl aromatic compounds; and

e) crosslinking monomers M5 selected from the group consisting of 2,3 epoxy-$C_1$-$C_4$-alkyl (meth)acrylates, oxazolinyl-$C_1$-$C_4$-alkyl (meth)acrylates, aziridinyl-$C_1$-$C_4$-alkyl (meth)acrylates, acetoacetoxy-$C_1$-$C_4$-alkyl (meth)acrylates, diacetone acrylamide, $C_1$-$C_8$-alkyl carbodiimido $C_1$-$C_4$-alkyl (meth)acrylates, N-$C_1$-$C_4$-alkylol (meth)acrylamides, N-($C_1$-$C_4$-alkoxymethyl)(meth)acrylamide and mixtures thereof.

26. The process according to embodiment 25, wherein the latex particles are selected from a) homogeneous particles which are homo- or copolymers of monomers M1 and/or M3, optionally further crosslinked by at least one monomer M4 and/or M5, or b) stage-polymerized and/or core-shell particles, wherein at least the surface of the particles comprises homo- and/or copolymers of monomers selected from monomers M2.

27. The process according to any of the preceding embodiments, wherein the at least one pore forming agent is selected from the group consisting of poly(meth)acrylic acid, polyvinyl $C_1$-$C_6$-alkylethers, polyvinyl pyrrolidone, polyvinyl caprolactame, polyvinyl $C_1$-$C_6$-alcohols, at least partially hydrolyzed polyvinyl $C_1$-$C_6$-esters, poly $C_1$-$C_6$-alkylene glycols, polyacrylamide, poly(meth)acrylic acid esters with $C_1$-$C_6$-alkanols, and copolymers or mixtures thereof.

28. The process according to any one of the preceding embodiments, wherein the polar solvent is selected from water, $C_1$-$C_5$ alkanols, in particular mono-alkanols, $C_1$-$C_5$ carboxylic acids, in particular mono-carboxylic acids, acetone, acetonitrile, ethyl acetate, tetrahydrofurane, dichloromethane, diethyl ether, chloroform, N-methyl-2-pyrrolidone , dimethyl acetamide, dimethyl formamide, dimethyl sulfoxide and mixtures thereof.

29. The process according to embodiment 28, wherein the polar solvent is water.

30. A membrane obtained by a process according to any one of the preceding embodiments.

31. The membrane according to embodiment 30, wherein the membrane has a mean pore size of 0.1 nm to 100 nm, preferably 0.5 nm to 50 nm.

32. The membrane according to any of the embodiments 30 or 31, wherein the membrane has a thickness of 50 nm to 0.3 mm, preferably 0.08 to 0.35 mm.

33. Use of a membrane according to any of the embodiments 28 to 30 for ultrafiltration, nanofiltration, reverse osmosis, forward osmosis, battery separators or selective extraction film gas separation.

## III. Further Embodiments

### III.1 Process steps

a) Polymerization techniques and preparation of latex particle dispersions

The latex particles of the invention are generally obtained by free radical dispersion polymerization processes known in the art, such as suspension polymerization, dispersion polymerization and emulsion polymerization. A preferred method of polymerization is emulsion polymerization.

The conditions required for the performance of free-radical emulsion polymerization may for example be taken from "Emulsionspolymerisation" [Emulsion Polymerization] in Encyclopedia of Polymer Science and Engineering, vol. 8, pages 659 ff. (1987); D. C. Blackley, in High Polymer Latices, vol. 1, pages 35 ff. (1966); H. Warson, The Applications of Synthetic Resin Emulsions, chapter 5, pages 246 ff. (1972); D. Diederich, Chemie in unserer Zeit 24, pages 135 to 142 (1990); Emulsion Polymerisation, Interscience Publishers, New York (1965); DE-A 40 03 422 and Dispersionen synthetischer Hochpolymerer [Dispersions of Synthetic High Polymers], F. Hölscher, Springer-Verlag, Berlin (1969)].

The free-radically initiated aqueous emulsion polymerization is triggered by means of a free-radical polymerization initiator (free-radical initiator). These may in principle be peroxides or azo compounds. Of course, redox initiator systems are also useful. Peroxides used may, in principle, be inorganic peroxides, such as hydrogen peroxide or peroxodisulfates, such as the mono- or di-alkali metal or ammonium salts of peroxodi-sulfuric acid, for example the mono- and disodium, -potassium or ammonium salts, in particular sodium persulfate, or organic peroxides such as alkyl hydroperoxides, for example tert-butyl hydroperoxide, p-menthyl hydroperoxide or cumyl hydroperoxide, in particular tert-butyl hydroperoxide and also dialkyl or diaryl peroxides, such as di-tert-butyl or di-cumyl peroxide. Azo compounds used are essentially 2,2'-azobis(isobutyronitrile), 2,2'-azobis(2,4-dimethylvaleronitrile) and 2,2'-azobis(amidinopropyl) dihydrochloride (AIBA, corresponds to V-50 from Wako Chemicals). Suitable oxidizing agents for redox initiator systems are essentially the peroxides specified above. Corresponding reducing agents which may be used are sulfur compounds with a low oxidation state, such as alkali metal sulfites, for example potassium and/or sodium sulfite, alkali metal hydrogensulfites, for example potassium and/or sodium hydrogensulfite, alkali metal metabisulfites, for example potassium and/or sodium metabisulfite, formaldehydesulfoxylates, for example potassium and/or sodium formaldehydesulfoxylate, alkali metal salts, specifically potassium and/or sodium salts of aliphatic sulfinic acids and alkali metal hydrogensulfides, for example potassium and/or sodium hydrogensulfide, salts of polyvalent metals, such as iron(II) sulfate, iron(II) ammonium sulfate, iron(II) phosphate, ene diols, such as dihydroxymaleic acid, benzoin and/or ascorbic acid, and reducing saccharides, such as sorbose, glucose, fructose and/or dihydroxyacetone.

In one particular embodiment a mixture of sodium persulfate and tert-butyl hydroperoxide is used as a free-radical polymerization initiator.

In general, the amount of the free-radical initiator used, based on the total amount of monomers in the respective polymerization stage, is 0.1 % to 15% by weight, preferably 1 % to 12% by weight and more preferably 3% to 11 % by weight.

The free-radical aqueous emulsion polymerization can be conducted at temperatures in the range from 0 to 170°C. Temperatures employed are generally 50 to 120°C, frequently 60 to 120°C and often 70 to 110°C. The free-radical aqueous emulsion polymerization can be conducted at a pressure of less than, equal to or greater than 1 atm (atmospheric pressure). Preferably, the free-radical aqueous emulsion polymerization is conducted at atmospheric pressure with exclusion of oxygen, for example under an inert gas atmosphere, for example under nitrogen or argon.

The polymerization can optionally be conducted in the presence of chain transfer agents. Chain transfer agents are understood to mean compounds that transfer free radicals and reduce the molecular weight or control chain growth in the polymerization. Examples of chain transfer agents are aliphatic and/or araliphatic halogen compounds, for example n-butyl chloride, n-butyl bromide, n-butyl iodide, methylene chloride, ethylene dichloride, chloroform, bromoform, bromotrichloromethane, dibromodichloromethane, carbon tetrachloride, carbon tetrabromide, benzyl chloride, benzyl bromide, organic thio compounds such as primary, secondary or tertiary aliphatic thiols, for example ethanethiol, n-propanethiol, 2-propanethiol, n-butanethiol, 2-butanethiol, 2-methyl-2-propanethiol, n-pentanethiol, 2-pentanethiol, 3-pentanethiol, 2-methyl-2-butanethiol, 3-methyl-2-butanethiol, n-hexanethiol, 2-hexanethiol, 3-hexanethiol, 2-methyl-2-pentanethiol, 3-methyl-2-pentanethiol, 4-methyl-2-pentanethiol, 2-methyl-3-pentanethiol, 3-methyl-3-pentanethiol, 2-ethylbutanethiol, 2-ethyl-2-butanethiol, n-heptanethiol and the isomeric compounds thereof, n-octanethiol and the isomeric compounds thereof, n-nonanethiol and the isomeric compounds thereof, n-decanethiol and the isomeric compounds thereof, n-undecanethiol and the isomeric compounds thereof, n-dodecanethiol and the isomeric compounds thereof, n-tridecanethiol and isomeric compounds thereof, substituted thiols, for example 2-hydroxyethanethiol, aromatic thiols such as benzenethiol, ortho-, meta- or para-methylbenzenethiol, and also further sulfur compounds described in Polymer Handbook, 3rd edition, 1989, J. Brandrup and E.H. Immergut, John Wiley & Sons, section II, pages 133 to 141, but also aliphatic and/or aromatic aldehydes such as acetaldehyde, propionaldehyde and/or benzaldehyde, unsaturated fatty

acids such as oleic acid, dienes having nonconjugated double bonds, such as divinylmethane or vinylcyclohexane, or hydrocarbons having readily abstractable hydrogen atoms, for example toluene. Alternatively, it is possible to use mixtures of the aforementioned chain transfer agents that do not disrupt one another. The total amount of chain transfer agents optionally used in the process of the invention, based on the total amount of monomers, will generally not exceed 1 % by weight.

It is advantageous when the aqueous polymer dispersion obtained on completion of polymerization is subjected to an aftertreatment to reduce the residual monomer content. This aftertreatment is effected either chemically, for example by completing the polymerization reaction using a more effective free-radical initiator system (known as postpolymerization), and/or physically, for example by stripping the aqueous polymer dispersion with steam or inert gas. Corresponding chemical and physical methods are familiar to those skilled in the art - see, for example, EP-A 771328, DE-A 19624299, DE-A 19621027, DE-A 19741184, DE-A 19741187, DE-A 19805122, DE-A 19828183, DE-A 19839199, DE-A 19840586 and DE-A 19847115. The combination of chemical and physical aftertreatment has the advantage that it removes not only the unconverted ethylenically unsaturated monomers but also other disruptive volatile organic constituents (VOCs) from the aqueous polymer dispersion.

The latex particles of the invention may have various physical and compositional morphologies. For instance, the particles may have homogeneous, core/shell, interpenetrating polymer network or microdomain morphology or may result from stage-polymerization. Preferred among those are homogeneous or core/shell morphologies or particles derived from stage-polymerization. The core/shell particles are characterized in that the polymer in the interior (core) of the particle is different from the polymer on the surface (shell) of the particle. There may be more than one concentric shell in the particle. The core may be predominantly hydrophobic in nature, and the shell may be hydrophilic in nature with a thin surface layer of a polymer which would undergo some chemical covalent or non-covalent reaction which stabilizes the film after formation, for example a crosslinking reaction. Stage polymerized particles are also characterized by a polymeric core which is preferably hydrophobic in nature and is obtained in a first polymerization stage. In at least one further polymerization stage further monomers, preferably hydrophilic in nature, are polymerized and introduced at least on the surface of the core. Core shell particles differ from stage-polymerized particles with respect to the shell, which is completely surrounding the core for core shell particles and may have gaps or inhomogeneities (i.e. no completely surrounding shell) for stage polymerized particles.

"Homogeneous" morphology means that the latex particle composed of a polymer or copolymer is essentially uniform in composition, independent of the location within the particle.

An "interpenetrating polymer network morphology" means that the particles contain two polymers, each in a network form.

A "microdomain morphology" refers to a dispersion of one polymer within a particle giving rise to surface heterogeneities, which have unique properties, e.g., adsorption characteristics, or to phase separated domains of different polymers in a particle.

The latex particles of the invention may also have a particle morphology with predominantly polar or hydrophilic polymer on the surface. These hydrophilic groups may provide non-covalent interactions between the particles.

Latex particles as defined above are used, in a first step of membrane production, for preparing a suitable latex particle dispersion.

Latex particle dispersions of the invention are generally prepared by mixing latex particles, as obtained by an above-mentioned polymerization procedure, with at least one water-soluble pore forming agent. Said mixing may be carried out in a suitable vessel, optionally under stirring.

b) Forming a layer from the latex particle dispersions

The second step in the process of preparing a porous membrane involves forming a layer from the latex particle dispersion, optionally by depositing said particles on the surface of a planar support. The layer forming may be accomplished by a number of methods known in the art of coating technology. These methods include: dipping a support into a dispersion of particles; spraying a dispersion of particles on a support; kiss-coating or roll-coating particles on a support; or filtering the dispersion through the support. The deposition of the particles produces a layer of particles on the surface. One preferred method of deposition of the particles on the support is filtration, at atmospheric pressure or under pressure, of the dispersion containing particles through the support. Another preferred method of deposition of the particles on the support is roll-coating.

c) Stabilizing the layer

The stabilization of the latex particle layer may be achieved by thermal coalescence of the particles or by chemical methods. The stabilization of the layer is necessary in order to obtain membranes which are of sufficient mechanical stability, that is, membranes capable of passing water under pressure in either dead-end or cross-flow mode

in either direction with minimal loss of particles or variation in permeability.

c1) Temperature-based methods

Latex particle layers may be stabilized by heating the layer and inducing coalescence of non-crosslinked or dangling ends of the polymer layer. Typically, a temperature increase to a temperature which is at least 10 °C above the Tg (glass transition temperature) of the latex particle layer, preferably 10 to 30 °C above the Tg, of the latex particle layer is necessary to induce coalescence.

Depending upon the intended use of the membrane, the stability, the mean pore size, and the pore size distribution of the membrane may be controlled by varying the temperature.

c2) Chemical methods

i) Crosslinking

Chemical methods of stabilizing the latex particle layer use a chemical reaction between the particles. The chemical reaction provides mechanical strengthening or reinforcement of the contact points between the particles. An example of such chemical reaction is crosslinking of the particles. This may be achieved by modifying the surface of the particles by introducing monomers, having functional groups which are capable of undergoing crosslinking, during polymerization in the process of particle preparation. Such monomers are known in the art. Such reactive groups can also be introduced after the processing of the particles by post-adding oligomeric or polymeric species to the continuous phase of the dispersion. These materials, being adsorbed on the surface of the particles, may then form linkages between the latex particles during the stabilization step.

In one embodiment one or more crosslinking agents are added, in order to initiate crosslinking, optionally at elevated temperatures, e.g. at 20 to 150 °C, preferably at 40 to 130 °C.

ii) Adding of plasticizers

Still another way of inducing stability to the latex particle layer is adding plasticizer to the dispersion of particles. Plasticizers may be chosen from a group consisting of phthalate ester, phosphate esters, fatty acid esters, glycol derivatives, hydrocarbons, and hydrocarbon derivatives, ketones, and higher alcohols. Preferred plasticizers include di(2-ethylhexyl)phthalate, tricresyl phosphate, acetone, hexane, higher alcohols, and isooctane. The choice of the plasticizer, and the amount of plasticizer used depends upon its compatibility with the polymer or a polymer component of the particle. For example, for polymethylmethacrylate particles, the plasticizer chosen is a polar plasticizer such as acetone or t-butyl alcohol or texanol, which may be used in amounts varying from 2 percent to 25 percent by weight of the polymer solids in the dispersion.

iii) Hydrophilic interactions

Latex particles carrying polar/hydrophilic groups on the surface may also be stabilized by means of non-covalent interactions between neighboring particles. In one embodiment the latex particles including polar groups are present as core-shell particles, wherein said polar groups are placed at least on the surface of the shell, which surrounds a, for example, non-polar core. In one embodiment the core of the latex particles is hydrophobic in nature, and the shell is hydrophilic in nature with a thin surface layer that undergoes non-covalent reactions with neighboring latex particles of the same morphology, which stabilizes the latex particle film. Said non-covalent interactions are for example interactions, like dipole-dipole interactions.

Due to the presence of a pore forming agent in the films, neither thermal nor chemical stabilization methods will lead to a too close contact of the particles, which would result in an undesired decrease of mean pore sizes. Thus, the pore forming agent advantageously prevents the particles from getting in too close contact. By choosing suitably dimensioned pore forming agents, the mean particle size of the films may be adjusted.

d) Removal of the pore forming agent from the polymer film

The removal of the water-soluble pore forming agent is accomplished by treating the polymer film with a polar solvent, for example by means of immersing the polymer film into the polar solvent or by means of filtration methods, optionally under reduced pressure. Suitable polar solvents may be selected from water, $C_1$-$C_5$ alcohols, such as methanol, ethanol, 1-propanol, 2-propanol or any butanol, $C_1$-$C_5$ carboxylic acids, such as formic acid, acetic acid, propionic acid, butyric acid valeric acid or isomers thereof, acetone, acetonitrile, ethyl acetate, tetrahydrofurane, dichloromethane,

diethyl ether, chloroform, N-methyl-2-pyrrolidone, dimethyl acetamide, dimethyl formamide, dimethyl sulfoxide and mixtures thereof. Preferably, water is used as polar solvent.

After removing the polar solvent from the polymer film, an additional drying step at a temperature of 10 to 90 °C, preferably 20 to 85 °C, in particular 50 to 80 °C may be applied.

e) Multi-layer membranes

The layers of particles which make up the membrane may be applied sequentially and may be made up of particles of the same or different sizes. For example, one or more, like 1 to 10, preferably 1 to 5, most preferable 1, 2 or 3, layers of relatively large particles may be applied to a support first, and then followed by one or more, like 1 to 10, preferably 1 to 5, most preferable 1, 2 or 3, additional layers of smaller particles. One advantage of this technique is that the larger particles can increase the homogeneity of the porous support and facilitate the application of smaller particles.

For the purpose of preparing multi-layer membranes the sequence of the process steps a) to c) can be repeated at least once before step d) or after step d) followed by a final washing step d), to obtain a porous membrane having a first and at least one further polymer film, wherein the latex particle dispersion for preparing said further polymer film may or may not contain at least one polymeric pore forming-agent. The latter means that in the second, third or any further film a pore forming agent does not necessarily have to be present during the step of forming a layer.

Alternatively, the sequence of steps a) to d) may be repeated at least once after step d), to obtain a porous membrane having a first and at least one further polymer film, wherein the latex particle dispersion for preparing said further polymer film may or may not contain at least one polymeric pore forming-agent.

In general, the number of layers that is most desirable in any given embodiment of the invention will depend on the intended use, e.g. as membranes for ultrafiltration, nanofiltration, reverse osmosis, forward osmosis, battery separators or selective extraction film gas separation, and on the size of the particles making up the layers.

## III.2 Membrane Support

The planar supports suitable for the present invention include those well known in the art and commercially available. The supports may be in the form of flat sheets or hollow fibers. Useful supports include non-woven materials, polysulfone, polyaryl sulfone, polyether sulfone, polyphenyl sulfone, polyethylene, polypropylene, polyester, cellulose, polycarbonate, polyphenylene oxide or polyvinyl chloride, nylon, cellulose nitrate or cellulose acetate-nitrate, interwoven or felted fibers of paper, plastic or glass including filter paper, microporous ceramics, graphite or stainless steel, polyvinylidene fluoride or polytetra-fluoroethylene-co-ethylene, and the like. Among those, non-woven materials, polyethylene terephthalate films, polyethylene films, polypropylene films, polyester films or glass sheets are preferred.

The supports generally possess irregular surfaces with broad pore size distributions. Consequently, the particles may not only be deposited on or near the surface, but may penetrate the pores and form layers internal to the pores of the support. The particles are predominantly located on the surface of the substrate. This may be achieved by proper selection of the particle size and the pore size of the substrate, for example in a range of from $10^3$ to $10^5$ nm, by chemical treatment of the substrate and of the particles, or by adjustments to the coating process such as using high shear in the coating process or presaturation of the support.

## III.3 Monomers

The ethylenically unsaturated monomers that may be used for the preparation of the latex particles of the invention may be selected from monomers M1, M2, M3, M4 and M5.

The monomers M1 are monoethylenically unsaturated, i.e. have precisely one ethylenically unsaturated C=C double bond. The monomers M1 are preferably selected from esters and diesters of monoethylenically unsaturated $C_3$-$C_8$-monocarboxylic and $C_4$-$C_8$-dicarboxylic acids with $C_1$-$C_{30}$-alkanols, particularly with $C_1$-$C_{10}$-alkanols, esters of vinyl alcohols or allyl alcohols with $C_1$-$C_{30}$-monocarboxylic acids, vinylaromatic hydrocarbons, amides and diamides of monoethylenically unsaturated $C_3$-$C_8$-monocarboxylic and $C_4$-$C_8$-dicarboxylic acids with $C_1$-$C_{30}$-alkylamines or di-$C_1$-$C_{30}$-alkylamines, especially with $C_1$-$C_{10}$-alkylamines or di-$C_1$-$C_{10}$-alkylamines, and mixtures thereof.

The term "monoethylenically unsaturated $C_3$-$C_8$-monocarboxylic acid" represents a monovalent carboxylic acid having 3 to 8 carbon atoms that has an ethylenically unsaturated C=C double bond, such as acrylic acid, methacrylic acid, vinylacetic acid or crotonic acid, for example.

The term "monoethylenically unsaturated $C_4$-$C_8$ dicarboxylic acid" represents a divalent carboxylic acid having 4 to 8 carbon atoms that has an ethylenically unsaturated C=C double bond, such as maleic acid, fumaric acid, itaconic acid or citraconic acid, for example.

Further suitable monomers M1 are, for example, vinyl halides, vinylidene halides, and mixtures thereof.

Suitable esters and diesters of monoethylenically unsaturated $C_3$-$C_8$-monocarboxylic and $C_4$-$C_8$-dicarboxylic

acids with $C_1$-$C_{30}$-alkanols, especially with $C_1$-$C_{10}$-alkanols, are, in particular, the esters of monoethylenically unsaturated $C_3$-$C_8$ monocarboxylic acids, especially the esters of acrylic acid and the esters of methacrylic acid, with $C_1$-$C_{30}$-alkanols, in particular with $C_1$-$C_{10}$-alkanols, such as methyl (meth)acrylate, methyl ethacrylate, ethyl (meth)acrylate, ethyl ethacrylate, n-propyl (meth)acrylate, isopropyl (meth)acrylate, n-butyl (meth)acrylate, sec-butyl (meth)acrylate, tert-butyl (meth)acrylate, tert-butyl ethacrylate, n-hexyl (meth)acrylate, n-heptyl (meth)acrylate, n-octyl (meth)acrylate, 1,1,3,3-tetramethylbutyl (meth)acrylate, ethylhexyl (meth)acrylate, n-nonyl (meth)acrylate, n-decyl (meth)acrylate, n-undecyl (meth)acrylate, tridecyl (meth)acrylate, myristyl (meth)acrylate, pentadecyl (meth)acrylate, palmityl (meth)acrylate, heptadecyl (meth)acrylate, nonadecyl (meth)acrylate, arachidyl (meth)acrylate, behenyl (meth)acrylate, lignoceryl (meth)acrylate, cerotyl (meth)acrylate, melissyl (meth)acrylate, palmitoleyl (meth)acrylate, oleyl (meth)acrylate, linolyl (meth)acrylate, linolenyl (meth)acrylate, stearyl (meth)acrylate and lauryl (meth)acrylate, but also the diesters of monoethylenically unsaturated $C_4$-$C_8$ dicarboxylic acids, in particular the diesters of maleic acid with $C_1$-$C_{30}$ alkanols, such as dimethyl maleate, diethyl maleate, di(n-propyl) maleate, diisopropyl maleate, di(n-butyl) maleate, di(n-hexyl) maleate, di(1,1,3,3-tetramethylbutyl) maleate, di(n-nonyl) maleate, ditridecyl maleate, dimyristyl maleate, dipentadecyl maleate, dipalmityl maleate, diarachidyl maleate and mixtures thereof. The term "(meth)acrylate" here comprises both, the corresponding ester of acrylic acid and also the corresponding ester of methacrylic acid.

Suitable esters of vinyl alcohol and allyl alcohol with $C_1$-$C_{30}$-monocarboxylic acids are, for example, vinyl formate, vinyl acetate, vinyl propionate, vinyl butyrate, vinyl laurate, vinyl stearate, vinyl esters of Versatic acid, allyl formate, allyl acetate, allyl propionate, allyl butyrate, allyl laurate, and mixtures thereof.

Suitable vinylaromatic hydrocarbons are styrene, 2-methylstyrene, 4-methylstyrene, 2-n-butylstyrene, 4-n-butylstyrene, 4-n-decylstyrene, especially styrene.

Suitable amides and diamides of monoethylenically unsaturated $C_3$-$C_8$ monocarboxylic and $C_4$-$C_8$ dicarboxylic acids with $C_1$-$C_{30}$ alkylamines or di-$C_1$-$C_{30}$ alkylamines, in particular with $C_1$-$C_{10}$ alkylamines or di-$C_1$-$C_{10}$ alkylamines, are, in particular, the amides of acrylic acid and of methacrylic acid with $C_1$-$C_{30}$ alkylamines or di-$C_1$-$C_{30}$ alkylamines, in particular with $C_1$-$C_{10}$ alkylamines or di-$C_1$-$C_{10}$ alkylamines, such as, for example, N-methyl(meth)acrylamide, N-ethyl(meth)acrylamide, N-propyl(meth)acrylamide, N-(n-butyl)(meth)acrylamide, N-(tert-butyl)(meth)acrylamide, N-(n-octyl)(meth)acrylamide, N-(1,1,3,3-tetramethylbutyl)(meth)acrylamide, N-ethylhexyl(meth)acrylamide, N-(n-nonyl)(meth)acrylamide, N-(n-decyl)(meth)acrylamide, N-(n-undecyl)(meth)acrylamide, N-tridecyl(meth)acrylamide, N-myristyl(meth)acrylamide, N-pentadecyl(meth)acrylamide, N-palmityl(meth)acrylamide, N-heptadecyl(meth)acrylamide, N-nonadecyl(meth)acrylamide, N-arachidyl(meth)acrylamide, N-behenyl(meth)acrylamide, N-lignoceryl(meth)acrylamide, N-cerotyl(meth)acrylamide, N-melissyl(meth)acrylamide, N-palmitoleyl(meth)acrylamide, N-oleyl(meth)acrylamide, N-linolyl(meth)acrylamide, N-linolenyl(meth)acrylamide, N-stearyl(meth)acrylamide, N-lauryl(meth)acrylamide, N,N-dimethyl(meth)acrylamide, N,N-diethyl(meth)acrylamide, but also the diamides and imides of maleic acid with $C_1$-$C_{30}$ alkylamines or di-$C_1$-$C_{30}$ alkylamines, in particular with $C_1$-$C_{10}$ alkylamines or di-$C_1$-$C_{10}$ alkylamines, such as, for example, N,N'-dimethylmaleamide, N,N'-diethylmaleamide, N,N'-dipropylmaleamide, N,N'-di-(tert-butyl)maleamide, N,N'-di-(n-octyl)maleamide, N,N'-di-(n-nonyl)maleamide, N,N'-ditridecylmaleamide, N,N'-dimyristylmaleamide, N,N,N',N'-tetramethylmaleamide, N,N,N',N'-tetraethylmaleamide, and mixtures thereof. The term "(meth)acrylamide" here comprises both, the corresponding amide of acrylic acid and the corresponding amide of methacrylic acid.

Suitable vinyl halides and vinylidene halides are vinyl chloride, vinylidene chloride, vinyl fluoride, vinylidene fluoride, and mixtures thereof.

Monomer M1 is preferably selected from esters of monoethylenically unsaturated $C_3$-$C_8$-monocarboxylic acids, in particular the esters of acrylic acid (acrylates) and the esters of methacrylic acid (methacrylates), with $C_1$-$C_{10}$-alkanols, and vinylaromatic hydrocarbons, more particularly from $C_1$-C-$_{10}$-alkylacrylates and $C_1$-$C_{10}$-alkylmethacrylates and vinylaromatic hydrocarbons, and especially from methyl acrylate, ethyl acrylate, n-propyl acrylate, iso-propyl acrylate, n-butyl acrylate, n-propyl acrylate, iso-propyl acrylate, tert-butyl acrylate, 2-ethylhexyl acrylate, methyl methacrylate, n-butyl methacrylate, tert-butyl methacrylate and styrene.

Among those n-butyl acrylate and styrene are particularly preferred.

According to one preferred embodiment of the invention, the latex particles comprise in copolymerized form at least two monomers M1 which are selected from esters of monoethylenically unsaturated $C_3$-$C_8$-monocarboxylic acids, more particularly the esters of acrylic acid and methacrylic acid, with $C_1$-$C_{30}$-alkanols, in particular with $C_1$-$C_{10}$-alkanols, and vinylaromatic hydrocarbons. According to one particularly preferred embodiment, the latex particles comprise in copolymerized form at least one monomer M1.1 and at least one monomer M1.2, the at least one monomer M1.1 being selected from $C_1$-$C_{10}$ alkylacrylates and preferably from methyl acrylate, ethyl acrylate, n-propyl acrylate, iso-propyl acrylate, n-butyl acrylate, n-propyl acrylate, iso-propyl acrylate, tert-butyl acrylate and 2-ethylhexyl acrylate, in particular n-butyl acrylate, and the at least one monomer M1.2 being selected from $C_1$-$C_{10}$ alkyl methacrylates and vinylaromatics, in particular styrene.

The monomers M2 may be selected from hydroxy-$C_2$-$C_4$ alkyl esters of monoethylenically unsaturated $C_3$-$C_8$ monocarboxylic acids, primary amides of monoethylenically unsaturated $C_3$-$C_8$ monocarboxylic acids, esters of hydroxy-$C_3$-$C_{10}$-alkylketones with monoethylenically unsaturated $C_3$-$C_8$ monocarboxylic acids, amides of amino-$C_3$-$C_{10}$-alkylke-

tones with monoethylenically unsaturated $C_3$-$C_8$-monocarboxylic acids, monoesters of monoethylenically unsaturated $C_3$-$C_8$-carboxylic acids with polyoxy-$C_2$-$C_4$ alkylene ethers, and monoethylenically unsaturated monomers having at least one urea group, and mixtures thereof.

Hydroxy-$C_2$-$C_4$-alkyl esters of monoethylenically unsaturated $C_3$-$C_8$-monocarboxylic acids that are suitable as M2 are, for example, the hydroxy-$C_2$-$C_4$-alkyl esters of acrylic acid and of methacrylic acid, such as 2-hydroxyethyl acrylate, 2-hydroxyethyl methacrylate, 2-hydroxyethyl ethacrylate, 2-hydroxypropyl acrylate, 2-hydroxypropyl methacrylate, 3-hydroxypropyl acrylate, 3-hydroxypropyl methacrylate, 3-hydroxybutyl acrylate, 3-hydroxybutyl methacrylate, 4-hydroxybutyl acrylate, 4-hydroxybutyl methacrylate, and mixtures thereof. Among those 2-hydroxypropyl acrylate is particularly preferred.

Primary amides of monoethylenically unsaturated $C_3$-$C_8$-monocarboxylic acids that are suitable as M2 are, for example, acrylamide, metharylamide, and mixtures thereof.

Esters of hydroxy-$C_3$-$C_{10}$-alkylketones with monoethylenically unsaturated $C_3$-$C_8$-mono-carboxylic acids that are suitable as M2 are, for example, N-(2-oxopropyl) acrylester, N-(2-oxopropyl) methacrylester, N-(1-methyl-2-oxopropyl)acrylester, N-(3-oxobutyl) acrylester, N-(3-oxobutyl) methacrylester, N-(1,1-dimethyl-3-oxobutyl) acrylaester, N-(1,1-dimethyl-3-oxobutyl) methacrylester, N-(4-oxohexyl) acrylester, and mixtures thereof.

Amides of amino-$C_3$-$C_{10}$-alkylketones with monoethylenically unsaturated $C_3$-$C_8$-mono-carboxylic acids that are suitable as M2 are, for example, N-(2-oxopropyl) acrylamide, N-(2-oxopropyl) methacrylamide, N-(1-methyl-2-oxopropyl)acrylamide, N-(3-oxobutyl) acrylamide, N-(3-oxobutyl) methacrylamide, N-(1,1-dimethyl-3-oxobutyl) acrylamide (also named diacetone acrylamide), N-(1,1-dimethyl-3-oxobutyl) methacrylamide, N-(4-oxohexyl) acrylamide, and mixtures thereof.

Suitable monomers M2 from the group of the monoesters of monoethylenically unsaturated $C_3$-$C_8$-carboxylic acids with polyoxy-$C_2$-$C_4$ alkylene ethers are, for example, the monoesters of monoethylenically unsaturated $C_3$-$C_8$-carboxylic acids, more particularly of acrylic acid and of methacrylic acid, with poly-$C_2$-$C_4$ alkylene ethers of the general formula (A)

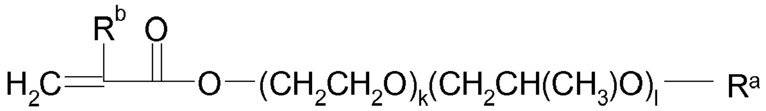

(A)

in which

the sequence of the alkylene oxide units is arbitrary,

k and l independently of one another are each an integer in the range from 0 to 100, in particular in the range from 0 to 50, the sum of k and l being at least 3, more particularly 4, e.g., 3 to 200, and more particularly 4 to 100,

$R_a$ is hydrogen, $C_1$-$C_{30}$-alkyl, $C_5$-$C_8$-cycloalkyl or $C_6$-$C_{14}$-aryl, and

$R^b$ is hydrogen or $C_1$-$C_8$ alkyl, more particularly hydrogen or methyl.

Preferably k is an integer from 3 to 50, more particularly 4 to 30. Preferably l is an integer from 0 to 30, more particularly 0 to 20. More preferably l is 0. Preferably the sum of k and l is situated in the range from 3 to 50 and more particularly in the range from 4 to 40.

$R_a$ in the formula (A) is preferably hydrogen, $C_1$-$C_{20}$ alkyl, e.g., methyl, ethyl, n-propyl, isopropyl, n-butyl or sec-butyl, n-pentyl, n-hexyl, octyl, 2-ethylhexyl, decyl, lauryl, palmityl or stearyl. $R_a$ is more preferably hydrogen or $C_1$-$C_4$ alkyl, in particular methyl.

$R^b$ is preferably hydrogen or methyl.

Suitable monomers M2 having at least one urea group are, for example, N-vinylurea, N-(2-acryloyloxyethyl)imidazolidin-2-one and N-(2-methacryloyloxyethyl)imidazolidin-2-one (2-ureidomethacrylate, UMA).

Monomer M2 is preferably selected from poly-$C_2$-$C_4$-alkylene ethers of the general formula (A’)

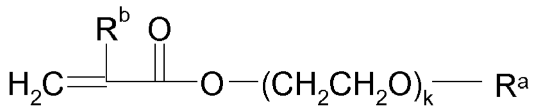

(A')

in which k is an integer from 4 to 40, $R_a$ is hydrogen or $C_1$-$C_4$ alkyl, in particular methyl, and $R^b$ is methyl.

Suitable monomers M3 are, for example, monoethylenically unsaturated $C_3$-$C_8$-mono-carboxylic acids, such as in particular acrylic acid and methacrylic acid, and monoethylenically unsaturated $C_4$-$C_8$ dicarboxylic acids, such as in particular maleic acid, fumaric acid and itaconic acid, and mixtures thereof.

Further suitable monomers M3 are, for example, unsaturated sulfonic acids, such as vinylsulfonic acid, allylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acids and their derivatives, e.g. styrene-4-sulfonic acid and styrene-3-sulfonic acid, 2-acrylamido-2-methylpropanesulfonic acid, and mixtures thereof.

Further suitable monomers M3 are, for example unsaturated phosphonic acids, such as vinylphosphonic acid, allylphosphonic acid, and mixtures thereof.

Further suitable monomers M3 are, for example, the monoesters and diesters of phosphoric acid with hydroxy-$C_2$-$C_4$ alkyl acrylates or methacrylates, such as hydroxyethyl acrylate, hydroxypropyl acrylate, hydroxybutyl acrylate, hydroxyethyl methacrylate, hydroxypropyl methacrylate or hydroxybutyl methacrylate, and mixtures of these mono- and/or diesters.

The monomers M3 are preferably selected from monoethylenically unsaturated $C_3$-$C_8$-monocarboxylic acids, such as in particular acrylic acid and methacrylic acid, and monoethylenically unsaturated $C_4$-$C_8$ dicarboxylic acids, such as in particular maleic acid, fumaric acid and itaconic acid, and mixtures thereof. More preferably the monomers M3 are selected from acrylic acid and methacrylic acid and in particular are acrylic acid.

The monomers M4 may be selected selected from hydroxydiesters of monoethylenically unsaturated $C_3$-$C_8$ monocarboxylic acids with saturated aliphatic or cycloaliphatic diols, monoesters of monoethylenically unsaturated $C_3$-$C_8$ monocarboxylic acids with monoethylenically unsaturated aliphatic or cycloaliphatic monohydroxy compounds and divinyl aromatic compounds, and mixtures thereof.

Hydroxydiesters of monoethylenically unsaturated $C_3$-$C_8$ monocarboxylic acids with saturated aliphatic or cycloaliphatic diols that are suitable as M4 are, for example, diacrylates and the dimethacrylates of saturated aliphatic or cycloaliphatic diols, such as the diacrylates and the dimethacrylates of ethylene glycol (1,2-ethanediol), propylene glycol (1,2-propanediol), 1,2-butanediol, 1,3-butanediol, 1,4-butanediol, neopentyl glycol (2,2-dimethyl-1,3-propanediol) or 1,2-cyclohexanediol, and mixtures thereof.

Monoesters of monoethylenically unsaturated $C_3$-$C_8$ monocarboxylic acids with monoethylenically unsaturated aliphatic or cycloaliphatic monohydroxy compounds that are suitable as M4 are, for example, acrylates and the methacrylates of monoethylenically unsaturated aliphatic or cycloaliphatic monohydroxy compounds, such as acrylates and the methacrylates of vinyl alcohol (ethenol), allyl alcohol (2-propen-1-ol) or 2-cyclohexen-1-ol, and mixtures thereof.

Suitable monomers M4 from the group of divinyl aromatic compounds are, for example, 1,3-divinyl benzene, 1,4-divinyl benzene, and mixtures thereof.

The monomers M4 are preferably selected from 1,3-divinyl benzene, 1,4-divinyl benzene, and mixtures thereof

The monomers M5 are preferably selected from 2,3 epoxy-$C_1$-$C_4$-alkyl (meth)acrylates, oxazolinyl-$C_1$-$C_4$-alkyl (meth)acrylates, aziridinyl-$C_1$-$C_4$-alkyl (meth)acrylates, acetoacetoxy-$C_1$-$C_4$alkyl (meth)acrylates, diacetone acrylamide, $C_1$-$C_8$-alkyl carbodiimido $C_1$-$C_4$-alkyl (meth)acrylates, N-$C_1$-$C_4$-alkylol (meth)acrylamides, N-($C_1$-$C_4$-alkoxymethyl)(meth)acrylamide and mixtures thereof. Among those 2,3 epoxypropyl(meth)acrylate, oxazolinyl(meth)acrylate, aziridinylethyl(meth)acrylate, acetoacetoxyethyl(meth)acrylate, diacetone acrylamide, t-butyl carbodiimido ethyl (meth)acrylate, N-isobutoxymethyl (meth)acrylamide and cyclohexyl carbodiimido ethyl (meth)acrylate are preferred. N-$C_1$-$C_4$-alkylol (meth)acrylamides, for instance N-methylol (meth)acrylamide, are particularly preferred.

Latex particles of the invention may be made of monomers M1-M5. Monomers M2 and M3 introduce polar groups into the particles. Monomers M4 act as crosslinkers and may help to stabilize the particles internally or by crosslinking of neighbouring particles. Monomers M5 may induce crosslinking of neighbouring particles, optionally under addition of suitable crosslinking agents. Latex particles of the invention may be in homogenous form. Said particles may be stabilized by thermal annealing or chemical crosslinking (internally or between neighbouring particles). Latex particles including polar groups (derivable from monomers M2 and M3, preferably from M2) may be present as core-shell or stage-polymerized particles with polar groups placed on the surface of the particles. It is assumed that films obtained from such core-shell or stage-polymerized particles are stabilized by non-covalent hydrophilic interactions between neighbouring particles.

In one embodiment the latex particles of the invention are selected from homogeneous particles which are homo-or copolymers of monomers M1 and/or M3, preferably copolymers of at least one monomer M1 and at least one

monomer M3, more preferably copolymers of two monomers M1 and one monomer M3, in particular copolymers of n-butyl acrylate, styrene and acrylic acid, optionally further crosslinked by at least one monomer M4 and/or M5, preferably by one monomer M4 or one monomer M5, in particular by divinylbenzene or N-methylolmethacrylamide or by a mixture of adipinic acid dihydrazide and diacetone acrylamide.

In another embodiment the latex particles of the invention are core-shell particles, wherein the shell comprises homo- and/or copolymers of monomers selected from monomers M2, preferably homopolymers of one monomer M2, more preferably homopolymers of hydroxy-$C_2$-$C_4$-alkyl esters of monoethylenically unsaturated $C_3$-$C_8$-mono-carboxylic acids or homopolymers of monoesters of monoethylenically unsaturated $C_3$-$C_8$-carboxylic acids with polyoxy-$C_2$-$C_4$ alkylene ethers, in particular homopolymers of 2-hydroxy propylacrylate or methoxy polyethyleneglycol methacrylate.

In a preferred embodiment the core of such core-shell particles is a homo-or copolymer of monomers M1 and/or M3, preferably a copolymer of at least one monomer M1 and at least one monomer M3, more preferably a copolymer of two monomers M1 and one monomer M3, in particular a copolymer of n-butyl acrylate, styrene and acrylic acid.

**III.4 Emulsifier**

In one embodiment the latex particle dispersion of the invention comprises at least one emulsifier including ionic and nonionic emulsifiers. Emulsifiers are surface-active substances whose molecular weight (numerical average) is situated typically below 2000 g/mol and especially below 1500 g/mol.

The amount of emulsifier is typically in the range from 0.001 % to 2% by weight, preferably 0.005% to 1.5% by weight, more preferably 0.01 % to 1.2% by weight, and in particular 0.5% to 1 % by weight, based on the total weight of the monomers used.

In one embodiment emulsifiers are selected from polymerizable emulsifiers, non-polymerizable emulsifiers and mixtures thereof.

Polymerizable emulsifiers of this kind comprise ethylenically unsaturated groups and are either nonionic or anionic emulsifiers. Polymerizable nonionic emulsifiers are preferably selected from $C_2$-$C_3$ alkoxylates of alkenols, more particularly of prop-2-en-1-ol, and monoesters of monoethylenically unsaturated monocarboxylic or dicarboxylic acids with poly-$C_2$-$C_3$ alkylene ethers, the degree of alkoxylation being usually 3 to 100 in each case. Polymerizable anionic emulsifiers are preferably selected from the corresponding sulfuric and phosphoric monoesters of the aforementioned nonionic polymerizable emulsifiers.

The non-polymerizable anionic emulsifiers typically include aliphatic carboxylic acids having in general at least 10 carbon atoms, and also their salts, more particularly their ammonium salts and alkali metal salts, aliphatic, araliphatic, and aromatic sulfonic acids having generally at least 6 carbon atoms, and also their salts, more particularly their ammonium salts and alkali metal salts, sulfuric monoesters with ethoxylated alkanols and alkylphenols, and also their salts, more particularly their ammonium salts and alkali metal salts, and also alkyl, aralkyl, and aryl phosphates, including phosphoric monoesters of alkanols and alkylphenols.

Examples of suitable anionic emulsifiers are as follows: alkali metal salts and ammonium salts of dialkyl esters of sulfosuccinic acid, alkali metal salts and ammonium salts of alkyl sulfates (alkyl radical: $C_8$ to $C_{18}$), alkali metal salts and ammonium salts of sulfuric monoesters with ethoxylated alkanols (EO degree: 4 to 30, alkyl radical: $C_8$ to $C_{18}$), alkali metal salts and ammonium salts of sulfuric monoesters with ethoxylated alkyl phenols (EO degree: 3 to 50, alkyl radical: $C_4$ to $C_{16}$), alkali metal salts and ammonium salts of alkylsulfonic acids (alkyl radical: $C_8$ to $C_{18}$), and of alkylarylsulfonic acids (alkyl radical: $C_4$ to $C_{18}$). Examples of suitable anionic emulsifiers are also the below-specified compounds of the general formula

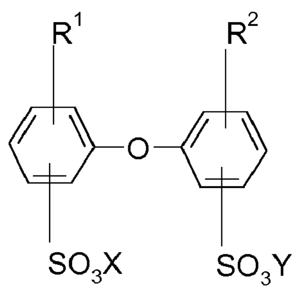

in which $R^1$ and $R^2$ are hydrogen or $C_4$ to $C_{14}$ alkyl and are not simultaneously hydrogen, and X and Y may be alkali metal ions and/or ammonium ions. Preferably $R^1$ and $R^2$ are hydrogen or linear or branched alkyl radicals having 6 to 18 carbon atoms and more particularly having 6, 12 and 16 carbon atoms, $R^1$ and $R^2$ not both simultaneously being hydrogen. X and Y are preferably sodium, potassium or ammonium ions, with sodium being particularly preferred.

Particularly advantageous compounds are those in which X and Y are sodium, $R^1$ is a branched alkyl radical having 12 carbon atoms, and $R^2$ is hydrogen or has one of the non-hydrogen definitions stated for $R^1$. Frequently, technical mixtures are used which contain a fraction of 50% to 90% by weight of the monoalkylated product, for example, Dowfax®2A1 (trade mark of the Dow Chemical Company) Further commercially available emulsifiers are Emulan® NP 50, Dextrol® OC 50, Emulgator 825, Emulgator 825 S, Emulan® OG, Texapon® NSO, Nekanil® 904 S, Lumiten® I-RA, Lumiten® I-SC, Lumiten® E 3065, Disponil® FES 77, Disponil® FES 993, Disponil® LDBS 23 IS, Lutensol® AT 18, Steinapol® VSL or Emulphor® NPS 25.

Suitable nonionic emulsifiers are typically ethoxylated alkanols having 8 to 36 carbon atoms in the alkyl radical, ethoxylated mono-, di-, and trialkylphenols having typically 4 to 12 carbon atoms in the alkyl radicals, the ethoxylated alkanols and alkylphenols typically having a degree of ethoxylation in the range from 3 to 50.

Further suitable emulsifiers are found, for example, in Houben-Weyl, Methoden der organischen Chemie, Volume 14/1, Makromolekulare Stoffe [Macromolecular compounds], Georg Thieme Verlag, Stuttgart, 1961, pp. 192 to 208.

111.5 Defoamer

The latex particle dispersion of the invention may comprise at least one defoamer. Said defoamer may be selected from polysiloxanes, such as polyalkyl siloxanes, polyalkylaryl siloxanes, polyether siloxane co-polymers, and combinations thereof. Alternatively, the defoamer may be a combination of silicone-free surface active polymers, or a combination of these with a polysiloxane. Such silicone-free polymers include alkoxylated alcohols, triisobutyl phosphate, and fumed silica. Commercially available products which may be used include, BYK 088, BYK A500, BYK 066N and BYK A535 each available from BYK Additives and Instruments, a subdivision of Altana; TEGO MR2132 or TEGO 2263 available from Evonik; and BASF SD23 and SD40, both available from BASF.

The defoamer may be contained in the latex particle dispersion in an amount of 0.03 to 0.8wt.-%, based on the total weight of the latex particle dispersion, preferably 0.05 to 0.5 wt.-%.

**111.6 Pore forming agent**

The water-soluble pore-forming agent may be selected from poly(meth)acrylic acid, polyvinyl $C_1$-$C_6$-alkylethers, polyvinyl pyrrolidone, polyvinyl caprolactame, polyvinyl $C_1$-$C_6$-alcohols, at least partially hydrolyzed polyvinyl $C_1$-$C_6$-esters, poly $C_1$-$C_6$-alkylene glycols, polyacrylamide, poly(meth)acrylic acid esters with $C_1$-$C_6$-alkanols, and copolymers or mixtures thereof.

In one embodiment the at least one water-soluble pore-forming agent has a molecular weight of from 500 to 20000 g/mol, preferably 1000 to 18000 g/mol, more preferably 3000 to 15000 g/mol, in particular 5000 to 15000 g/mol.

Among said pore forming agents poly(meth)acrylates are preferred. Such compounds are commercially available from BASF SE, Germany, under the trade name Sokalan®. Particularly preferred are the compounds of the Sokalan® PA series with a molecular weight of preferably 1000 to 18000 g/mol, more preferably 3000 to 15000 g/mol, in particular 5000 to 15000 g/mol

Water-soluble means that said pore-forming agents provide a solubility in deionized water of at least of at least 50 g/l at 25°C and 1 bar, preferably of at least 100 g/l at 25°C and 1 bar, more preferably of at least 150 g/l at 25°C and 1 bar.

**III.7 Use of the membranes of the invention**

The invention further relates to membranes that are obtained by a process according to any of the above-mentioned embodiments and to the use of said membranes for separation processes, for example ultrafiltration, nanofiltration, reverse osmosis, forward osmosis, battery separators or selective extraction film gas separation.

Membrane separation processes can differ greatly with regard to membranes, driving forces, areas of application, and industrial or economic relevance.

Typical pressure-driven membrane processes are microfiltration, ultrafiltration, nanofiltration, forward and reverse osmosis and gas separation. Ultrafiltration, nanofiltration and reverse osmosis are basically similar and differ only in the size of the separated particles and the membranes used. A mixture of components of different sizes is brought to the surface of a semipermeable membrane. Under the driving force of a hydrostatic pressure gradient, some components permeate the membrane, whereas others are retained. A feed solution is separated into a filtrate that is depleted of particles or molecules and a retentate in which these components are concentrated.

In ultrafiltration (UF) the components to be retained by the membrane are molecules or small particles $\leq 0.2$ $\mu$m in diameter. Generally, the osmotic pressure of the feed solution is negligibly small and hydrostatic pressures of 0.1 to 1 MPa are used. UF membranes are mostly asymmetrically structured.

Nanofiltration (NF) separation processes are often used for surface water and fresh groundwater, with the

purpose of softening (polyvalent cation removal) and removal of disinfection by-product precursors such as natural organic matter and synthetic organic matter.

In reverse osmosis (RO), particles, macromolecules and low molecular mass compounds (salts or sugars) are separated from a solvent. Feed solutions, therefore, often have significant osmotic pressure, which must be overcome by the hydrostatic pressure applied as driving force.

Forward osmosis (FO) is an osmotic process that, like reverse osmosis, uses a semi-permeable membrane to effect separation of water from dissolved solutes. The driving force for this separation is an osmotic pressure gradient, such that a draw solution of high concentration (relative to that of the feed solution), is used to induce a net flow of water through the membrane into the draw solution, thus effectively separating the feed water from its solutes.

The driving forces for gas separation processes are hydrostatic pressure and concentration gradients. Typically asymmetric homogenous membranes are used for the separation of gas mixtures.

In batteries, particularly in liquid electrolyte batteries, porous membranes are used to prevent a contact of anode and cathode, while enabling a free transport of ions/the liquid electrolyte through the membrane. Typically, said membranes have a pore size of $\leq 1\ \mu m$.

The present invention will now be explained in more detail on the basis of the subsequent non-limiting examples.

## Experimental part

### 1. Preparation of latex particles

1.1 Analysis

The mean particle diameter of the polymer particles was determined by dynamic light scattering (DLS) for mono-modal distributions and by Disc Centrifuge Particle Size Analysis (DCP) for multi-modal distributions.

a) DLS

The mean particle diameter of the polymer particles was determined by dynamic light scattering of an aqueous polymer dispersion diluted with deionized water to 0.005% to 0.01 % by weight at 25°C by means of Nano ZS 90 from Malvern Instruments, England. What is reported is the cumulant $Z_{average}$ diameter of the measured autocorrelation function (ISO Standard 13321)

b) DCP

The multi-modal particle size distribution of polymer particles was determined by disc centrifuge method of an aqueous polymer dispersion diluted with deionized water at room temperature by means of BI-DCP (Disc Centrifuge Particle Size Analyzer, Brookhaven) with disc speed 12000 rpm and run time 30-90 min.

The glass transition temperature was determined by the DSC method (Differential Scanning Calorimetry, 10 K/min, midpoint measurement, ISO 11357) by means of a Discovery DSC from TA instruments.

Layer thickness was determined by field emission scanning electron microscopy (FESEM, measured on a JEOL JSM-6700LV) or scanning electron microscopy (SEM, measured on a JEOL JSM-5600LV). Samples for FESEM or SEM analyses were prepared by fracturing said samples in liquid nitrogen and coating them with platinum.

1.2 General procedure

A polymerization vessel equipped with metering units and closed-loop temperature control was initially charged at 20 to 25°C (room temperature) under a nitrogen atmosphere with 418.00 g of deionized water, 0.55 g of L-ascorbic acid and defined amount of a pre-product, and heated to 90°C while stirring at 150 rpm. On attainment of this temperature a first amount of 20% of Feed 2 was added in a time period of 2 min. After addition of said first amount of Feed 2 the addition of Feed 1 and the remaining 80% of Feed 2 started. After complete addition of Feed 1 (completed after 3 h) and Feed 2 (completed after 3,5 h) Addition 1 was added and the resulting mixture was stirred at 90 °C for 10 min. Then Feed 3 and Feed 4 were fed within 60 min. After complete addition of Feeds 3 and 4, Feed 5 was added within 15 min. After 15 min of stirring, Addition 2 was added. The resulting mixture was cooled to room temperature and Feeds 6 and 7 were added. After that the pH-value was adjusted to 6 by addition of a 10% NaOH solution.

The following Feeds and Additions were generally used:

| | | |
|---|---|---|
| Feed 2: | 110.00 g | sodium persulfate |

(continued)

| | | |
|---|---|---|
| Addition 1: | 42.02 g | demineralized water |
| Feed 3: | 11.00 g | tert.-butyl hydroperoxide |
| Feed 4: | 13.44 g | acetone bisulfite |
| Addition 2: | 28.93 g | demineralized water |
| Feed 5: | 9.48 g | Lumiten I - SC |
| Feed 6: | 2.20 g | Acticide MBS 2550 |
| Feed 7: | 1.47 g | Acticide MV |

In the following Examples different Feeds 1 were used. In Example 10 and 11 an additional Feed 1-1 was added to the reactor together with remaining 20% of Feed 1, after 80% of Feed 1 had been added.

Lumiten® I - SC represents a solution of sodium sulphosuccinate/isotridecanol ethoxylate in water (available from BASF SE). Acticide MBS 2550 represents a mixture of 1,2-benzisothiazoline-3-one and 2-methyl-4-isothiazoline-3-one (available from Thor specialties, Inc. USA). Acticide MV represents a mixture of 5-chloro-2-methyl-4-isothiazoline-3-one and 2-methyl-4-isothiazoline-3-one (available from Thor specialties, Inc. USA).

1.3 Examples 1-10

Example 1

The latex particles were prepared according to the general procedure of 1.2. 83.33 g of the pre-product 6772 were used in the initial charge. The following Feed 1 was used:

| | |
|---|---|
| 360.79 g | demineralized water |
| 73.33 g | Disponil FES 993 |
| 95.65 g | Disponil LDBS 23 IS |
| 8.80 g | sodium hydroxide solution |
| 22.00 g | acrylic acid |
| 308.00 g | n-butyl acrylate |
| 770.00 g | styrene |
| 22.00 g | demineralized water |

Example 2

The latex particles were prepared according to the general procedure of 1.2. 26.67 g of the pre-product 6772 were used in the initial charge. The following Feed 1 was used:

| | |
|---|---|
| 380.06 g | demineralized water |
| 73.33 g | Disponil FES 993 |
| 95.65 g | Disponil LDBS 23 IS |
| 8.80 g | sodium hydroxide solution |
| 22.00 g | acrylic acid |
| 308.00 g | n-butyl acrylate |
| 770.00 g | styrene |
| 22.00 g | demineralized water |

Example 3

The latex particles were prepared according to the general procedure of 1.2. 190.20 g of the pre-product GM10034-Mem-0010 were used in the initial charge. The following Feed 1 was used:

| | |
|---|---|
| 452.97 g | demineralized water |
| 25.83 g | Disponil LDBS 23 IS |

(continued)

| | |
|---|---|
| 8.80 g | sodium hydroxide solution |
| 22.00 g | acrylic acid |
| 308.00 g | n-butyl acrylate |
| 770.00 g | styrene |
| 22.00 g | demineralized water |

Example 4

The latex particles were prepared according to the general procedure of 1.2. 26.67 g of the pre-product 6772 were used in the initial charge. The following Feed 1 was used:

| | |
|---|---|
| 193.06 g | demineralized water |
| 73.33 g | Disponil FES 993 |
| 95.65 g | Disponil LDBS 23 IS |
| 8.80 g | sodium hydroxide solution |
| 22.00 g | acrylic acid |
| 220.00 g | N-methylolmethacrylamide |
| 308.00 g | n-butyl acrylate |
| 770.00 g | styrene |
| 22.00 g | demineralized water |

Example 5

The latex particles were prepared according to the general procedure of 1.2. 26.67 g of the pre-product 6772 were used in the initial charge. The following Feed 1 was used:

| | |
|---|---|
| 420.55 g | demineralized water |
| 36.67 g | Disponil FES 993 |
| 47.83 g | Disponil LDBS 23 IS |
| 8.80 g | sodium hydroxide solution |
| 22.00 g | acrylic acid |
| 33.00 g | divinylbenzene |
| 308.00 g | n-butyl acrylate |
| 737.00 g | styrene |
| 22.00 g | demineralized water |

Example 6

The latex particles were prepared according to the general procedure of 1.2. 83.33 g of the pre-product 6772 were used in the initial charge. The following Feed 1 was used:

| | |
|---|---|
| 214.28 g | demineralized water |
| 36.67 g | Disponil FES 993 |
| 47.83 g | Disponil LDBS 23 IS |
| 8.80 g | sodium hydroxide solution |
| 22.00 g | acrylic acid |
| 220.00 g | N-methylolmethacrylamide |
| 33.00 g | divinylbenzene |
| 308.00 g | n-butyl acrylate |
| 704.00 g | styrene |
| 22.00 g | demineralized water |

Example 7

The latex particles were prepared according to the general procedure of 1.2. 26.67 g of the pre-product 6772 were used in the initial charge. The following Feed 1 was used:

| | |
|---|---|
| 233.55 g | demineralized water |
| 36.67 g | Disponil FES 993 |
| 47.83 g | Disponil LDBS 23 IS |
| 8.80 g | sodium hydroxide solution |
| 22.00 g | acrylic acid |
| 220.00 g | N-methylolmethacrylamide |
| 33.00 g | divinylbenzene |
| 308.00 g | n-butyl acrylate |
| 704.00 g | styrene |
| 22.00 g | demineralized water |

Example 8

The latex particles were prepared according to the general procedure of 1.2. 83.33 g of the pre-product 6772 were used in the initial charge. The following Feed 1 was used:

| | |
|---|---|
| 214.28 g | demineralized water |
| 36.67 g | Disponil FES 993 |
| 47.83 g | Disponil LDBS 23 IS |
| 8.80 g | sodium hydroxide solution |
| 22.00 g | acrylic acid |
| 220.00 g | N-methylolmethacrylamide |
| 33.00 g | divinylbenzene |
| 308.00 g | n-butyl acrylate |
| 704.00 g | styrene |
| 22.00 g | demineralized water |

Example 9

The latex particles were prepared according to the general procedure of 1.2. 26.67 g of the pre-product 6772 were used in the initial charge. The following Feed 1 was used:

| | |
|---|---|
| 233.55 g | demineralized water |
| 36.67 g | Disponil FES 993 |
| 47.83 g | Disponil LDBS 23 IS |
| 8.80 g | sodium hydroxide solution |
| 22.00 g | acrylic acid |
| 220.00 g | N-methylolmethacrylamide |
| 33.00 g | divinylbenzene |
| 308.00 g | n-butyl acrylate |
| 704.00 g | styrene |
| 22.00 g | demineralized water |

Example 10

The latex particles were prepared according to the general procedure of 1.2. 26.67 g of the pre-product 6772 were used in the initial chargeAn additional Feed 1-1 was added to the reactor together with remaining 20% of Feed 1, after 80% of Feed 1 had been added.

The following Feed 1 was used:

| | |
|---|---|
| 380.06 g | demineralized water |
| 73.33 g | Disponil FES 993 |
| 95.65 g | Disponil LDBS 23 IS |
| 8.80 g | sodium hydroxide solution |
| 22.00 g | acrylic acid |
| 308.00 g | n-butyl acrylate |
| 748.00 g | styrene |
| 22.00 g | demineralized water |

The following Feed 1-1 was used:

| | |
|---|---|
| 22.00 g | 2-hydroxypropyl acrylate |

Example 11

The latex particles were prepared according to the general procedure of 1.2. 26.67 g of the pre-product 6772 were used in the initial charge. An additional Feed 1-1 was added to the reactor together with remaining 20% of Feed 1, after 80% of Feed 1 had been added.

The following Feed 1 was used:

| | |
|---|---|
| 380.06 g | demineralized water |
| 73.33 g | Disponil FES 993 |
| 95.65 g | Disponil LDBS 23 IS |
| 8.80 g | sodium hydroxide solution |
| 22.00 g | acrylic acid |
| 308.00 g | n-butyl acrylate |
| 748.00 g | styrene |
| 22.00 g | demineralized water |

The following Feed 1-1 was used:

| | |
|---|---|
| 22.00 g | Bisomer MPEG 350 MA |

Example 12

The latex particles were prepared according to the general procedure of 1.2. 26.67 g of the pre-product 6772 were used in the initial charge. The following Feed 1 was used:

| | |
|---|---|
| 440.80 g | demineralized water |
| 18.33 g | Disponil FES 993 |
| 23.91 g | Disponil LDBS 23 IS |
| 8.80 g | sodium hydroxide solution |
| 11.00 g | acrylic acid |
| 319.00 g | n-butyl acrylate |
| 770.00 g | styrene |
| 22.00 g | demineralized water |

Table 1 summarizes the above Examples. Particles with different particle size, particles with a core-shell or stage-polymerized structure and hydrophilic units at least on the surface or crosslinked particles were obtained.

**Table 1**

| Basis: Feed 2, Addition 1, Feed 3, Feed 4, Addition 2, Feed 5, Feed 6, Feed 7 | | | |
|---|---|---|---|
| | | | |
| Example | Modifications | Variations | Particle Size |
| | | | |
| 1 | Particle Size | 2.5 pphm of seed pre-product 6772 in initial feed | 100nm |
| 2 | Particle Size | 0.8 pphm of seed pre-product 6772 in initial feed | 150nm |
| 3 | Particle Size | 8.5 pphm of 150 nm seed GM10034-Mem-0010 in initial feed | 350 nm |
| 4 | Crosslinkinking | +3 pphm MAmol, -3 pphm Styrene in Feed 1 | 150nm |
| 5 | Crosslinkinking | +3 pphm DVB, -3 pphm Styrene in Feed 1 | 150nm |
| 6 | Crosslinkinking | +3 pphm MAmol, +3 pphm DVB, -6 pphm Styrene in Feed 1 | 100nm |
| 7 | Crosslinkinking | +3 pphm MAmol, +3 pphm DVB, -6 pphm Styrene in Feed 1 | 150nm |
| 8 | Crosslinkinking | +3 pphm MAmol, +3 pphm AMA, -6 pphm Styrene in Feed 1 | 100nm |
| 9 | Crosslinkinking | +3 pphm MAmol, +3 pphm AMA, -6 pphm Styrene in Feed 1 | 150nm |
| 10 | Hydrophilic surface | after addition of 80% of Feed 1: +2 pphm HPA, -2 pphm Styrene in Feed 1 | 150nm |
| 11 | Hydrophilic surface | after addition of 80% of Feed 1: +2 pphm Bisomer, - 2 pphm Styrene in Feed 1 | 150nm |
| 12 | Particle size | 0.8 pphm of seed pre-product 6772 in initial feed | 150nm |

The unit "pphm" represents "parts per hundred million". Pre-product 6772 represents a polystyrene seed with a diameter of 30 nm.GM10034-Mem-0010 represents particles which were obtained according to the procedure of Example 2 by using the following Feed 1 instead:

| | |
|---|---|
| 380.06 g | demineralized water |
| 73.33 g | Disponil FES 993 |
| 95.65 g | Disponil LDBS 23 IS |
| 8.80 g | sodium hydroxide solution |
| 22.00 g | acrylic acid |
| 308.00 g | n-butyl acrylate |
| 770.00 g | styrene |
| 22.00 g | demineralized water |

MAmol represents N-Methylolmethacrylamide. DVB represents divinylbenzene. AMA represents allylmethacrylate. HPA represents 2-hydroxypropylacrylate. Bisomer represents Bisomer® MPEG350MA, a methoxy polyethyleneglycol methacrylate commercially available from GEO Specialty Chemicals, Inc., Paints & Coatings Group, USA. Disponil FES 993 represents sodium fatty alcohol polyglycol ether sulphate and Disponil LDBS 23 IS represents sodium-n($C_{10}$-$C_{13}$)alkyl benzene sulphonate.

**2. Preparation of latex particle dispersions**

Dispersion 1:

Latex particles as obtained by Example 3 with a mean particle diameter of 350 nm (35 g, 74 wt.-%), Sokalan ® PA 20 (polyacrylate, 2500 g/mol, 26.4 g, 26 wt.-%, commercially available from BASF SE, Germany) and TEGO ® Antifoam 2263 XP (defoamer, 0.12 wt.-%, commercially available from Evonik, Germany) were admixed in a bottle.

Dispersion 2:

Latex particles as obtained by Example 2 with a mean particle diameter of 150 nm (30 g, 74 wt.-%), Sokalan ® PA 15 (polyacrylate, 1200 g/mol 26.4 g, 26 wt.-%, commercially available from BASF SE, Germany) and TEGO ® Antifoam 2263 XP (defoamer, 0.14 wt.-%, commercially available from Evonik, Germany) were admixed in a bottle.

Dispersion 3:

Latex particles as obtained by Example 10 with a mean particle diameter of 150 nm and 2-hydroxypropylacrylate (35 g, 74 wt.-%), Sokolan ® PA 15 (polyacrylate, 1200 g/mol 13.4 g, 13 wt.-%, commercially available from BASF SE, Germany), PEG5 (polyethylene glycol, 1450 g/mol, 6.1 g, 13 wt.-%) and TEGO ® Antifoam 2263 XP (defoamer, 0.14 wt.-%, commercially available from Evonik, Germany) were admixed in a bottle.

**3. Membrane production**

Example 13

A sheet of non-woven support (made of polyester) was laid out, adhered onto a glass plate and exposed to 70 °C for 10 min. Dispersion 1 was cast onto the non-woven support and left to dry at 70°C for 30 min to obtain a first layer on the support. Afterwards Dispersion 2 was cast onto said first layer and was left to dry at 70°C for 30 min to obtain a second layer on top of the first layer. Finally, the support with both layers on top was immersed into deionized water.
Two membranes 1 a and 1 b were obtained according to the above procedure. Membrane 1 a provided a casting thickness of the first layer of 200 μm, of the second layer of 60 μm. Membrane 1 b provided a casting thickness of the first layer of 100 μm, of the second layer of 60 μm. The layer thickness was controlled by a casting knife and determined by FESEM measurements.

Example 14

A sheet of non-woven support (made of polyester) was laid out and adhered onto a glass plate and exposed to 70 °C for 10 min. Dispersion 1 was cast onto the non-woven support with a thickness of 100 μm and left to dry at 70°C for 45 min. Afterwards the glass sheet was immersed into deionized water to obtain a first layer on the support.
A dispersion of latex particles according to Example 12 in water (0.02 wt.-% dispersion in deionized water) with a mean particle diameter of 150 nm was filtered through said first layer on the support with the help of suction at a pressure of 2-6 mbar. The resulting product was then dried at 70°C for 5 min, before it was immersed into deionized water. Two membranes 2a and 2b were obtained according to above procedure. Membrane 2a was obtained by using 100 mL of the dispersion of latex particles according to Example 12, Membrane 2b was obtained by using 150 mL of the dispersion of latex particles according to Example 12.

Example 15

A sheet of non-woven support (made of polyester) was laid out and adhered onto a glass plate and exposed to 70 °C for 10 min. Dispersion 3 was cast onto the non-woven support with a thickness of 200 μm and left to dry at 70°C for 45 min. Afterwards the glass sheet was immersed into deionized water to obtain a first layer on the support.
A dispersion of latex particles according to Example 12 in water (0.02 wt.-% dispersion in deionized water) with a mean particle diameter of 150 nm was filtered through said first layer on the support with the help of suction at a pressure of 2-6 mbar. The resulting membrane was then dried at 70°C for 5 min, before it was immersed into deionized water to obtain Membrane 3.

**4. Water flux and Molecular Weight Cut-Off (MWCO)**

For Membranes 1 a, 1 b, 2a, 2b and 3 water flux (a) and MWCO (b) were determined according to the following procedures:

(a) Deionised water was passed through the membrane at a pressure of 1 bar at room temperature. After 30 min, the amount of water that had flowed out in a fixed period of time was measured. The pure water permeability (PWP, $Lm^{-2}h^{-1}bar^{-1}$) was then calculated according to the following equation:

$$PWP= V_{perm}/(A \cdot t \cdot \Delta P)$$

wherein $V_{perm}$ represents the volume of permeate (L), A represents the effective filtration area ($m^2$), t represents the filtration time (h) and $\Delta P$ represents the transmembrane pressure (bar).
(b) A polyethyleneglycol/polyethyleneoxide solution (1000 ppm) was pumped through the membrane under a pressure of 1 bar at room temperature (24 ± 2°C) for 15 min. The permeate was collected and both the feed solution and permeate were analyzed by gel permeation chromatography. The chromatograph (1260 Infinity GPC-SEC System, Agilent, CA) was equipped with a PL Aquagel-OH Mixed-H 8μm Column (Agilent, CA) and was connected to an online refractive index detector. The retention times of the chromatograph were calibrated using PEG/PEO standards (Mw 200-1.2 million) obtained from Malvern, UK. Ratios of the refractive index signals from permeate and feed solution samples were calculated to determine the lowest molecular weight at which 90% of the polymer was retained by the membrane. The separation efficiency was determined by the rejection ratio, which was calculated by the following equation:

$$R_{PEG}=[1-(C_p/C_f)]\times 100\%$$

wherein $c_p$ represents the concentration of the polymer in the permeate ($moldm^{-3}$) and $c_f$ represents the concentration of the polymer in the feed solution ($moldm^{-3}$).

The following results were obtained:

| Membrane | Water flux | MWCO |
|---|---|---|
| 1a | 5 | 2457 |
| 1b | 3,7 | 13471 |
| 2a | 101 | 188725 |
| 2b | 64 | 123361 |
| 3 | 2152 | 32526 (50% rejection) |

The disclosure of herein cited documents is incorporated by reference.

## Claims

**1.** A process for the preparation of porous membranes, which process comprises the steps of

a) dispersing latex particles in at least one water-soluble polymeric pore forming-agent to obtain a latex particle dispersion,
b) forming a layer from said dispersion,
c) stabilizing said layer to obtain a polymer film, and
d) treating the polymer film of step c) with a polar solvent, to remove the water-soluble polymeric pore forming-agent.

**2.** The process according to claim 1, wherein the sequence of steps a) to c) is repeated at least once before step d) or after step d) followed by a final washing step d), to obtain a porous membrane having a first and at least one further polymer film, wherein the latex particle dispersion for preparing said further polymer film may or may not contain at least one water-soluble polymeric pore forming-agent.

**3.** The process according to claim 1, wherein the sequence of steps a) to d) is repeated at least once after step d), to obtain a porous membrane having a first and at least one further polymer film, wherein the latex particle dispersion for preparing said further polymer film may or may not contain at least one water-soluble polymeric pore forming-agent.

4. The process according to any of the preceding claims, wherein in step c) the layer is stabilized by heating the layer to a temperature above the glass transition temperature of the latex particles.

5. The process according to claim 4, wherein the layer is heated to a temperature in a range of from -40 to 200 °C, preferably 20 to 160 °C.

6. The process according to any of claims 1 to 5, wherein in step c) the layer is stabilized by non-covalent hydrophilic interactions between the latex particles.

7. The process according to claim 6, wherein the latex particles are core shell particles or stage-polymerized particles carrying hydrophilic groups at least on their surface.

8. The process according to any of claims 1 to 5, wherein in step c) the layer is stabilized by crosslinking of the latex particles carrying crosslinkable functional groups at least on their surface.

9. The process according to claim 8, wherein for crosslinking the layer is heated to a temperature in a range of 20 to 150 °C, preferably 40 to 130 °C.

10. The process according to claim 8 or 9, wherein in step c) crosslinking is performed by (i) reacting the crosslinkable groups contained in the layer and/or by (ii) bringing at least one crosslinking agent in contact with the layer.

11. The process according to claim 10, wherein the crosslinking agent is selected from melamine-formaldehyde derivatives; urea formaldehyde; benzoguanamine; glycouril; ammonium metal carbonates, wherein the metal is selected from zinc, zirconium, calcium or aluminum; polyfunctional aziridines; polycarbodiimides; hydrazine-based agents, such as reaction products of hydrazine and $C_2$-$C_6$ dicarboxylic acids; or a mixture thereof.

12. The process according to claim 10, wherein the crosslinkable groups are selected from $C_1$-$C_4$ alkylol groups, $C_1$-$C_4$ alkyloxy-$C_1$-$C_4$-alkyl groups, epoxy groups, oxazoline groups, amine groups, carboxy groups, carboxylate groups, hydroxy groups and/or keto groups.

13. The process according to any of the preceding claims, wherein in step b) the layer is formed on a planar support.

14. The process according to claim 13, wherein said support is made of non-woven materials, polyethylene terephthalate films, polyethylene films, polypropylene films, polyester films or glass sheets.

15. The process according to any of preceding claims, wherein the latex particles have a mean particle diameter, determined by dynamic light scattering (DLS) or disc centrifuge particle size analysis (DCP), of 30 to 800 nm, preferably 50 to 550 nm.

16. The process according to any of the preceding claims, wherein each polymer film has a thickness of 30 to 500 $\mu$m, preferably 30 to 200 $\mu$m.

17. The process according to any of the preceding claims, wherein the latex particle dispersion additionally comprises at least one emulsifier selected from the group consisting of anionic, cationic or nonionic emulsifiers or mixtures thereof.

18. The process according to any of the preceding claims, wherein the latex particle dispersion additionally comprises at least one defoamer selected from the group consisting of polysiloxanes, such as poly$C_1$-$C_6$alkyl siloxanes, poly$C_1$-$C_6$alkylaryl siloxanes, polyether siloxane co-polymers, $C_1$-$C_4$-alkoxylated $C_1$-$C_6$alcohols, triisobutyl phosphate, fumed silica and mixtures thereof

19. The process according to any of the preceding claims, wherein the latex particles are prepared by means of emulsion polymerization.

20. The process according to any of the preceding claims, wherein the latex particles are homo- and/or copolymers of ethylenically unsaturated monomers.

21. The process according to claim 20, wherein the ethylenically unsaturated monomers are selected from

a) monomers M1 selected from the group consisting of esters of monoethylenically unsaturated $C_3$-$C_8$ monocarboxylic acids with $C_1$-$C_{10}$ alkanols; and vinylaromatic hydrocarbons;
b) polar monomers M2 selected from the group consisting of hydroxy-$C_2$-$C_4$ alkyl esters of monoethylenically unsaturated $C_3$-$C_8$ monocarboxylic acids, primary amides of monoethylenically unsaturated $C_3$-$C_8$ monocarboxylic acids, esters of hydroxy-$C_3$-$C_{10}$-alkylketones with monoethylenically unsaturated $C_3$-$C_8$ monocarboxylic acids, amides of amino-$C_3$-$C_{10}$-alkylketones with monoethylenically unsaturated $C_3$-$C_8$ monocarboxylic acids, monoesters of monoethylenically unsaturated $C_3$-$C_8$ carboxylic acids with polyoxy-$C_2$-$C_4$ alkylene ethers, and monoethylenically unsaturated monomers having at least one urea group;
c) monomers M3 having an acidic group selected from the group consisting of monoethylenically unsaturated $C_3$-$C_8$ monocarboxylic acids and monoethylenically unsaturated $C_4$-$C_8$ dicarboxylic acids, 2-(meth)acrylamide-$C_2$-$C_6$-alkyl sulfonic acid;
d) crosslinking monomers M4 having at least two non-conjugated ethylenically unsaturated double bonds selected from the group consisting of diesters of monoethylenically unsaturated $C_3$-$C_8$ monocarboxylic acids with saturated aliphatic or cycloaliphatic diols, monoesters of monoethylenically unsaturated $C_3$-$C_8$ monocarboxylic acids with monoethylenically unsaturated aliphatic or cycloaliphatic monohydroxy compounds and divinyl aromatic compounds; and
e) crosslinking monomers M5 selected from the group consisting of 2,3 epoxy-$C_1$-$C_4$-alkyl (meth)acrylates, oxazolinyl-$C_1$-$C_4$-alkyl (meth)acrylates, aziridinyl-$C_1$-$C_4$-alkyl (meth)acrylates, acetoacetoxy-$C_1$-$C_4$-alkyl (meth)acrylates, diacetone acrylamide, $C_1$-$C_8$-alkyl carbodiimido $C_1$-$C_4$-alkyl (meth)acrylates, N-$C_1$-$C_4$-alkylol (meth)acrylamides, N-($C_1$-$C_4$-alkoxymethyl)(meth)acrylamide and mixtures thereof.

**22.** The process according to claim 21, wherein the latex particles are selected from a) homogeneous particles which are homo-or copolymers of monomers M1 and/or M3, optionally further crosslinked by at least one monomer M4 and/or M5 or b) stage-polymerized and/or core shell particles, wherein at least the surface of the particles comprises homo- and/or copolymers of monomers selected from monomers M2.

**23.** The process according to any of the preceding claims, wherein the at least one water-soluble pore forming agent is selected from the group consisting of poly(meth)acrylic acid, polyvinyl $C_1$-$C_6$-alkylethers, polyvinyl pyrrolidone, polyvinyl caprolactame, polyvinyl $C_1$-$C_6$-alcohols, at least partially hydrolyzed polyvinyl $C_1$-$C_6$-esters, poly $C_1$-$C_6$-alkylene glycols, polyacrylamide, poly(meth)acrylic acid esters with $C_1$-$C_6$-alkanols, and copolymers or mixtures thereof.

**24.** The process according to any one of the preceding claims, wherein the polar solvent is selected from water, $C_1$-$C_5$ alcohols, $C_1$-$C_5$ carboxylic acids, acetone, acetonitrile, ethyl acetate, tetrahydrofurane, dichloromethane, diethyl ether, chloroform, N-methyl-2-pyrrolidone, dimethyl acetamide, dimethyl formamide, dimethyl sulfoxide and mixtures thereof.

**25.** The process according to claim 24, wherein the polar solvent is water.

**26.** A membrane obtained by a process according to any one of the preceding claims.

**27.** The membrane according to claim 26, wherein the membrane has a mean pore size of 0.1 nm to 100 nm.

**28.** Use of a membrane according to claim 26 or 27 for ultrafiltration, nanofiltration, reverse osmosis, forward osmosis, battery separators or selective extraction film gas separation.

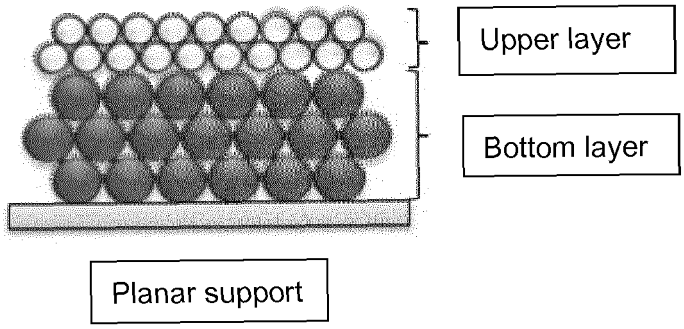


Fig. 1

Europäisches Patentamt
European Patent Office
Office européen des brevets

# EUROPEAN SEARCH REPORT

Application Number
EP 17 17 7592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/092809 A1 (RIES PAUL D [US] ET AL) 18 July 2002 (2002-07-18) * Paragraphs 15-25, 29-30, 41-44,; examples 1-24 * ----- | 1-28 | INV. B01D67/00 B01D69/02 B01D71/28 B01D71/40 |
| X | US 2014/175013 A1 (MECHELHOFF MARTIN [DE] ET AL) 26 June 2014 (2014-06-26) * claims 1-27 * ----- | 1-28 | |

TECHNICAL FIELDS SEARCHED (IPC)
B01D

The present search report has been drawn up for all claims

| Place of search | Date of completion of the search | Examiner |
|---|---|---|
| Munich | 13 November 2017 | Kukolka, Florian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 17 17 7592

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2017

| Patent document cited in search report | Publication date | Patent family member(s) | Publication date |
|---|---|---|---|
| US 2002092809 A1 | 18-07-2002 | NONE | |
| US 2014175013 A1 | 26-06-2014 | AU 2012215417 A1 | 05-09-2013 |
| | | BR 112013020114 A2 | 25-10-2016 |
| | | CA 2826601 A1 | 16-08-2012 |
| | | CN 103370124 A | 23-10-2013 |
| | | EP 2486974 A1 | 15-08-2012 |
| | | EP 2673074 A1 | 18-12-2013 |
| | | JP 5909617 B2 | 27-04-2016 |
| | | JP 2014506531 A | 17-03-2014 |
| | | RU 2013141217 A | 20-03-2015 |
| | | US 2014175013 A1 | 26-06-2014 |
| | | WO 2012107510 A1 | 16-08-2012 |
| | | ZA 201306753 B | 28-05-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- FR 2099183 A
- EP 0711199 B1
- US 6750050 B2
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A


### Non-patent literature cited in the description


- Emulsionspolymerisation. Encyclopedia of Polymer Science and Engineering. 1987, vol. 8, 659 ff
- **D. C. BLACKLEY.** *High Polymer Latices,* 1966, vol. 1, 35 ff
- **H. WARSON.** The Applications of Synthetic Resin Emulsions. 1972, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **J. BRANDRUP ; E.H. IMMERGUT.** Polymer Handbook. John Wiley & Sons, 1989, 133-141
- Makromolekulare Stoffe. **HOUBEN-WEYL.** Methoden der organischen Chemie. Georg Thieme Verlag, 1961, vol. 14/1, 192-208